# EUROPEAN PATENT SPECIFICATION

(11) **EP 3 708 600 B1**
(45) Date of publication and mention of the grant of the patent: **19.07.2023**
(21) Application number: 18877176.0
(22) Date of filing: 25.10.2018
(51) Int. Cl.: C08G 59/50, C08J 5/04, C08K 7/02, C08L 33/00, C08L 63/00, C09D 163/00

(54) **CURABLE COMPOSITION AND FIBER-REINFORCED COMPOSITE MATERIAL**
HÄRTBARE ZUSAMMENSETZUNG UND FASERVERSTÄRKTES VERBUNDMATERIAL
COMPOSITION DURCISSABLE ET MATÉRIAU COMPOSITE RENFORCÉ AVEC DES FIBRES

(30) Priority: 08.11.2017 JP 2017215536; 06.02.2018 JP 2018019128
(43) Date of publication of application: 16.09.2020
(73) Proprietor: DIC Corporation, Tokyo 174-8520 (JP)
(72) Inventor: MATSUI Shigeki, Ichihara-shi Chiba 290-8585 (JP); KIMURA Makoto, Ichihara-shi Chiba 290-8585 (JP)
(74) Representative: Adam, Holger
(86) International application number: PCT/JP2018/039638
(87) International publication number: WO 2019/093139

(56) References cited:
- WO-A1-2009/101961
- WO-A1-2017/030754
- WO-A2-03/063572
- JP-A- S56 115 346
- JP-A- 2003 535 181
- JP-A- 2007 154 160
- JP-A- 2009 218 509
- JP-A- 2013 256 547
- US-A- 5 698 657
- RYAN M HYDRO ET AL: "Epoxies toughened with triblock copolymers", JOURNAL OF POLYMER SCIENCE PART B: POLYMER PHYSICS, JOHN WILEY & SONS, INC, US, vol. 45, no. 12, 15 June 2007 (2007-06-15) , pages 1470-1481, XP009136921, ISSN: 0887-6266, DOI: 10.1002/POLB.21166 [retrieved on 2007-05-08]

## Description

### Technical Field

The present invention relates to a curable composition which is excellent in mechanical strength or heat resistance in terms of a cured product thereof, a cured product thereof, a fiber-reinforced composite material, a fiber-reinforced resin molded article, and a method for producing a fiber-reinforced resin molded article.

### Background Art

A fiber-reinforced resin molded article has attracted attention for features of being excellent in mechanical strength while being lightweight, and use of the fiber-reinforced resin molded article in various structural applications including a housing or various members of an automobile, an aircraft, a ship, or the like has been expanded. The fiber-reinforced resin molded article can be produced by molding a fiber-reinforced composite material according to a molding method such as a filament winding method, a press molding method, a hand lay-up method, a pultrusion method, and an RTM method.

The fiber-reinforced composite material is obtained by impregnating a reinforced fiber with a resin. Since a resin used for the fiber-reinforced composite material is required to have storage stability at room temperature, and exhibit durability and strength in terms of a cured product thereof, in general, a thermosetting resin is frequently used. Moreover, since the resin is used in a state of being impregnated in the reinforced fiber as described above, a resin having lower viscosity is more preferable, and from the viewpoint of improvement in industrial productivity, a curing time is preferably short. Furthermore, performance required for the resin varies depending on an application of the fiber-reinforced resin molded article, and for example, when the fiber-reinforced resin molded article is used for a structural component such as an engine or a core material for an electric wire, it is important to provide a cured product having such a heat resistance that the resultant fiber-reinforced resin molded article can withstand a severe usage environment for a long period of time. When the fiber-reinforced resin molded article is used for a housing or a member of an automobile, a ship, an aircraft, a tank, or the like, it is required that the mechanical strength of the cured product is high and deterioration over time is small.

As one of resin systems widely studied for the fiber-reinforced composite material, an epoxy resin composition containing an epoxy resin and a curing agent is mentioned. The epoxy resin composition has been studied for a long time for an application such as a paint or various binders, and it is known that the epoxy resin composition becomes a rapidly curable resin material by using an aliphatic or alicyclic amine as a curing agent (refer to PTL 1) . However, with the epoxy resin composition as described in PTL 1, a cured product having strength and heat resistance enough to be used for a fiber-reinforced composite material cannot be obtained, and thus development of a resin material having superior mechanical strength or heat resistance has been required.

RYAN M HYDRO ET AL: "Epoxies toughened with triblock copolymers", JOURNAL OF POLYMER SCIENCE PART B: POLYMER PHYSICS, JOHN WILEY & SONS, INC, US, vol. 45, no. 12, 15 June 2007, pages 1470-1481 discloses that three different commercial triblock copolymers from Arkema were evaluated as potential toughening agents for two different lightly crosslinked epoxies.

US 5 698 657 A discloses that flexible epoxy resins are made by curing the epoxy with an amine curing agent in the presence of a low molecular weight acrylate copolymer made from a major amount of a lower aliphatic ester or amide of acrylic or methacrylic acid and a minor amount of an ethylenically unsaturated monomer having functionality reactive with functional groups present in the epoxy resin or its curing agent.

WO 2017/030754 A1 provides an insulation material comprising a thermoset composition. Such thermosets are the reaction product of an ambient temperature liquid epoxy-terminated prepolymer, an acrylate monomer, and optionally one or more of a short chain polyalkylene glycol diglycidyl ether, a second epoxy and/or a filler with a curing agent comprising at least one amine or polyamine.

### Citation List

### Patent Literature

PTL 1: JP-B-63-45408

### Summary of Invention

### Technical Problem

Accordingly, an object to be achieved by the present invention is to provide a curable composition which is excellent in mechanical strength or heat resistance in terms of a cured product thereof; and a cured product thereof; a fiber-reinforced composite material; a fiber-reinforced resin molded article; and a method for producing a fiber-reinforced resin molded article.

### Solution to Problem

The present inventors have conducted intensive studies to achieve the object and as a result, have been found that by using an N-(aminoalkyl) piperazine compound as a curing agent of an epoxy resin composition in combination with an acrylic resin, mechanical strength of a cured product is significantly improved as compared with the case where another amine compound is used, thereby completing the present invention.

That is, the present invention provides a curable composition containing an epoxy compound (A), an amine compound (B), and an acrylic resin (C), wherein the acrylic resin (C) is a diblock-type acrylic resin, in which the amine compound (B) contains an N-(aminoalkyl) piperazine compound (B1) as an essential component.

The present invention is further disclosed in the claims and provides a cured product of the curable composition; a fiber-reinforced composite material using the curable composition; a fiber-reinforced resin molded article; and a method for producing a fiber-reinforced resin molded article.

### Advantageous Effects of Invention

According to the present invention, it is possible to provide a curable composition which is excellent in mechanical strength or heat resistance in terms of a cured product thereof; a cured product thereof; a fiber-reinforced composite material; a fiber-reinforced resin molded article; and a method for producing a fiber-reinforced resin molded article. Description of Embodiments

A curable composition of the present invention contains an epoxy compound (A), an amine compound (B), and an acrylic resin (C), wherein the acrylic resin (C) is a diblock-type acrylic resin, the amine compound (B) containing an N-(aminoalkyl) piperazine compound (B1) as an essential component.

As the epoxy compound (A), a wide variety of compounds can be used without particular limitation. Moreover, one kind of the epoxy compound (A) may be used alone, or two or more kinds thereof may be used in combination. Some specific examples of the epoxy compound (A) include diglycidyl oxybenzene, diglycidyl oxynaphthalene, an aliphatic epoxy resin, a biphenol-type epoxy resin, a bisphenol-type epoxy resin, a novolak-type epoxy resin, a triphenolmethane-type epoxy resin, a tetraphenolethane-type epoxy resin, a phenol or naphthol aralkyl-type epoxy resin, a phenylene or naphthylene ether-type epoxy resin, a dicyclopentadiene-phenol addition reaction product-type epoxy resin, a phenolic hydroxyl group-containing compound-alkoxy group-containing aromatic compound co-condensation-type epoxy resin, a glycidylamine-type epoxy resin, and a naphthalene skeleton-containing epoxy resin other than these resins.

Examples of the aliphatic epoxy resin include glycidyl etherified products of various aliphatic polyol compounds. Examples of the aliphatic polyol compound include an aliphatic diol compound such as ethylene glycol, propylene glycol, 1,3-propanediol, 2-methylpropanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl 1,5-pentanediol, neopentyl glycol, 1,6-hexanediol, 1,4-bis(hydroxymethyl) cyclohexane, and 2,2,4-trimethyl-1,3-pentanediol; and a tri- or higher functional aliphatic polyol compound such as trimethylolethane, trimethylolpropane, glycerin, hexanetriol, pentaerythritol, ditrimethylolpropane, and dipentaerythritol. Among them, a glycidyl etherified product of the aliphatic diol compound is preferable since a curable composition exhibiting superior mechanical strength in terms of the cured product is obtained.

Examples of the biphenol-type epoxy resin include resins obtained by polyglycidyl etherification of one or more kinds of biphenol compounds such as biphenol and tetramethylbiphenol with an epihalohydrin. Among them, a resin having an epoxy equivalent of 150 to 200 g/eq is preferable.

Examples of the bisphenol-type epoxy resin include resins obtained by polyglycidyl etherification of one or more kinds of bisphenol compounds such as bisphenol A, bisphenol F, and bisphenol S with an epihalohydrin. Among them, a resin having an epoxy equivalent of 158 to 200 g/eq is preferable.

Examples of the novolak-type epoxy resin include resins obtained by polyglycidyl etherification of a novolak resin, which is formed of one or more kinds of various phenol compounds such as phenol, dihydroxybenzene, cresol, xylenol, naphthol, dihydroxynaphthalene, bisphenol, and biphenol, with an epihalohydrin.

Examples of the triphenolmethane-type epoxy resin include a resin having a structural moiety represented by Structural Formula (1) as a repeating structural unit. 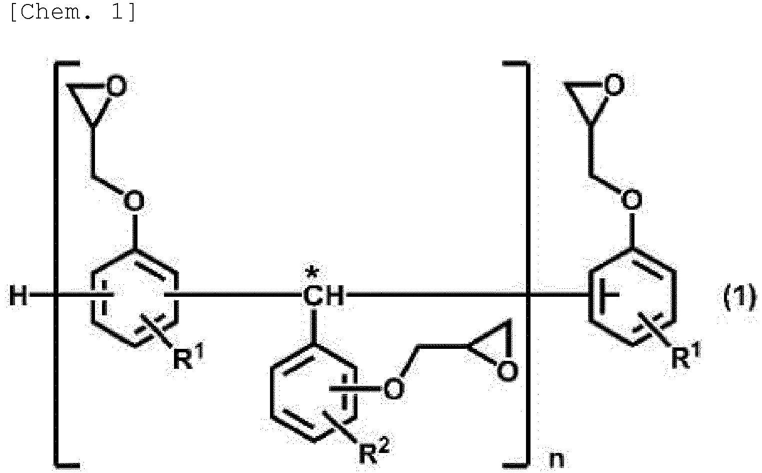 [In the formula, R¹ and R² are each independently a hydrogen atom or a bonding point linked to the structural moiety represented by Structural Formula (1) via a methine group marked with *. n is an integer of 1 or more.]

Examples of the phenol or naphthol aralkyl-type epoxy resin include a resin having a molecular structure in which a glycidyl oxybenzene or glycidy loxynaphthalene structure is knotted at a structural moiety represented by any one of Structural Formulae (2-1) to (2-3). 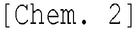 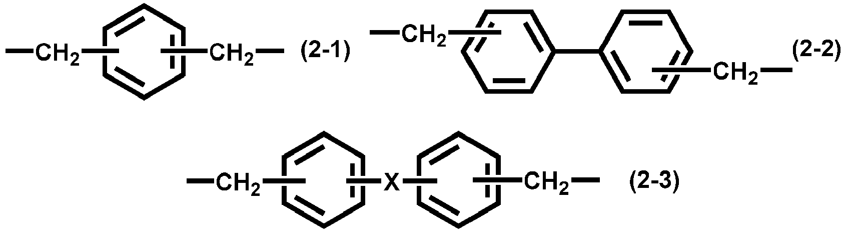 In the formulae, X is any of an alkylene group having 2 to 6 carbon atoms, an ether bond, a carbonyl group, a carbonyloxy group, a sulfide group, or a sulfone group.

Examples of the glycidylamine-type epoxy resin include N,N-diglycidyl aniline, 4,4'-methylene bis[N,N-diglycidyl aniline], triglycidyl aminophenol, and N,N,N',N'-tetraglycidyl xylylenediamine.

As one example of the naphthalene skeleton-containing epoxy resin, for example, a bis(hydroxynaphthalene)-type epoxy compound represented by any one of Structural Formulae (3-1) to (3-3) is mentioned.

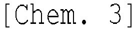

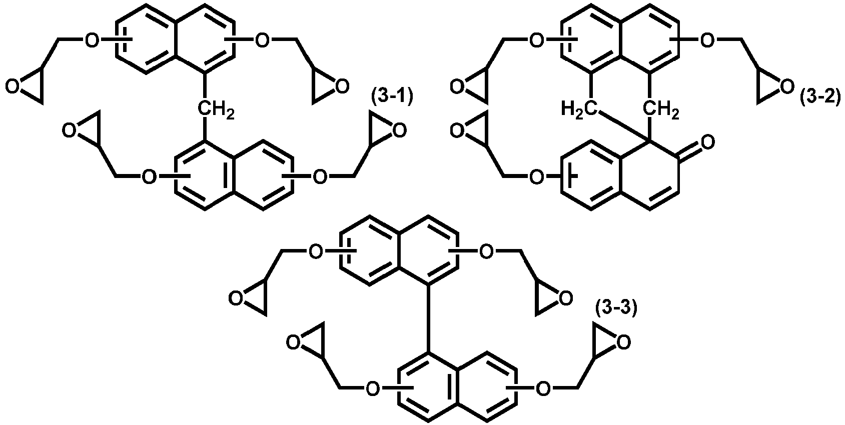

Among the epoxy compounds (A), since a curable composition having excellent balance between the heat resistance and the mechanical strength of the cured product is obtained, it is preferable that any one of an aliphatic epoxy resin, a bisphenol-type epoxy resin, a triphenolmethane-type epoxy resin, a glycidylamine-type epoxy resin, and a bis(hydroxynaphthalene)-type epoxy compound represented by any one of Structural Formulae (3-1) to (3-3) is essentially used. Among them, a bisphenol-type epoxy resin is particularly preferable, and is preferably used in an amount of 40% by mass or more with respect to a total mass of the epoxy compound (A). Moreover, from the viewpoint of superior heat resistance and mechanical strength of the cured product, the bisphenol-type epoxy resin is preferably used in combination with the aliphatic epoxy resin. In this case, the mass ratio of the bisphenol-type epoxy resin to the aliphatic epoxy resin is preferably 70/30 to 99/1. Furthermore, when the aliphatic epoxy resin is used, a proportion of the aliphatic epoxy resin with respect to the total mass of the epoxy compound (A) is preferably 1% to 30% by mass. When the triphenolmethane-type epoxy resin is used, the triphenolmethane-type epoxy resin is preferably used in an amount of 5% to 50% by mass with respect to the total mass of the epoxy compound (A). When the glycidylamine-type epoxy resin is used, the glycidylamine-type epoxy resin is preferably used in an amount of 5% to 50% by mass with respect to the total mass of the epoxy compound (A). When the bis(hydroxynaphthalene)-type epoxy compound is used, the bis(hydroxynaphthalene)-type epoxy compound is preferably used in an amount of 1% to 30% by mass with respect to the total mass of the epoxy compound (A).

The amine compound (B) is used as a curing agent or a curing accelerator for the epoxy compound (A). In the present invention, as the amine compound (B), an N-(aminoalkyl) piperazine compound (B1) is an essential component.

Examples of the N- (aminoalkyl) piperazine compound (B1) include a compound represented by Structural Formula (4). 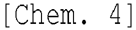 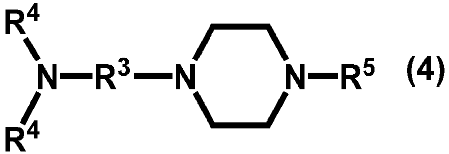 [In the formula, R³ is an alkylene group and R⁴ is a hydrogen atom or an alkyl group. R⁵ is a hydrogen atom or an aminoalkyl group represented by -R³-NR⁴₂.]

The alkylene group represented by R³ in Structural Formula (4) may be linear or may have a branched structure. Moreover, the number of carbon atoms thereof is not particularly limited. Among them, since a curable composition which is excellent in rapid curability as well as heat resistance or mechanical strength of a cured product thereof is obtained, R³ is preferably an alkylene group having 1 to 6 carbon atoms. Furthermore, a linear alkylene group having 1 to 6 carbon atoms is more preferable.

R⁴ in Structural Formula (4) is a hydrogen atom or an alkyl group. The alkyl group may be linear or may have a branched structure. Moreover, the number of carbon atoms thereof is not particularly limited. Among them, since a curable composition which is excellent in rapid curability as well as heat resistance or mechanical strength of a cured product thereof is obtained, R⁴ is preferably a hydrogen atom or an alkyl group having 1 to 4 carbon atoms and more preferably a hydrogen atom.

R⁵ in Structural Formula (4) is a hydrogen atom or an aminoalkyl group represented by -R³-NR⁴₂. Among them, since a curable composition which is excellent in rapid curability as well as heat resistance or mechanical strength of a cured product thereof is obtained, R⁵ is more preferably a hydrogen atom.

In the present invention, as the amine compound (B), amine compounds other than the N-(aminoalkyl) piperazine compound (B1) may be used in combination therewith. In the present invention, since an excellent effect for heat resistance or mechanical strength of a cured product thereof is sufficiently exhibited, a proportion of the N- (aminoalkyl) piperazine compound (B1) with respect to a total mass of the amine compound (B) is preferably 20% to 80% by mass.

Examples of other amine compounds include an aliphatic amine compound (B2) such as ethylenediamine, N,N,N' ,N'-tetramethylethylenediamine, propylenediamine, N,N,N' , N'-tetramethylpropylenediamine, dimethylaminopropylamine, diethylaminopropylamine, dibutylaminopropylamine, diethylenetriamine, N,N,N',N",N"-pentamethyldiethylenetriamine, triethylenetetramine, tetraethylenepentamine, 3,3'-diaminodipropylamine, butanediamine, pentanediamine, hexanediamine, trimethylhexanediamine, N,N,N' ,N'-tetramethylhexanediamine, bis(2-dimethylaminoethyl) ether, dimethylaminoethoxyethoxyethanol, triethanolamine, dimethylaminohexanol, and 3,9-bis(3-aminopropyl)-2,4,8,10-tetraoxy spiro(5,5) undecane adduct;
an amine compound (B3) having a polyoxyalkylene structure in a molecular structure, such as polyoxyethylene diamine and polyoxypropylene diamine;
an alicyclic amine compound (B4) such as cyclohexylamine, dimethylaminocyclohexane, mensendiamine, isophoronediamine, norbornenediamine, bis(aminomethyl) cyclohexane, diaminodicyclohexylmethane, and methylene bis(methylcyclohexaneamine) ;
a heterocyclic amine compound (B5) such as pyrrolidine, piperidine, piperazine, N,N'-dimethylpiperazine, morpholine, methylmorpholine, ethylmorpholine, quinuclidine (1-azabicyclo[2.2.2]octane), triethylenediamine (1,4-diazabicyclo[2.2.2]octane), pyrrole, pyrazole, pyridine, hexahydro-1,3,5-tris(3-dimethylaminopropyl)-1,3,5-triazine, and 1,8-diazabicyclo-[5.4.0]-7-undecene;
an aromatic ring-containing amine compound (B6) such as phenylenediamine, diaminodiphenylmethane, diaminodiphenylsulfone, N-methylbenzylamine, N,N-dimethylbenzylamine, diethyltoluenediamine, xylylenediamine, α-methylbenzylmethylamine, and 2,4,6-tris(dimethylaminomethyl) phenol;
an imidazole compound (B7) such as imidazole, 1-methylimidazole, 2-methylimidazole, 3-methylimidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenylimidazole isocyanuric acid adduct, 2-methylimidazole isocyanuric acid adduct, 2-phenyl-4,5-dihydroxymethylimidazole, 2-phenyl-4-methyl-5-hydroxymethylimidazole, 1-cyanoethyl-2-phenyl-4,5-di(2-cyanoethoxy) methylimidazole, 1-dodecyl-2-methyl-3-benzylimidazolium chloride, and 1-benzyl-2-phenylimidazole hydrochloride; and
an imidazoline compound (B8) such as 2-methylimidazoline and 2-phenylimidazoline.

Among these other amine compounds, the aliphatic amine compound (B2) is preferably used and triethylenetetramine is more preferable. When the aliphatic amine compound (B2) is used, a mass ratio [(B1)/(B2)] of the N-(aminoalkyl) piperazine compound (B1) to the aliphatic amine compound (B2) is preferably 20/80 to 80/20.

In addition, from the viewpoint of superior heat resistance or mechanical strength of the cured product, the alicyclic amine compound (B4) is preferably used. Furthermore, since a curable composition which is excellent in rapid curability as well as heat resistance or mechanical strength of a cured product thereof is obtained, a compound, in which an alicyclic structure is bonded to an amino group via an alkylene group, such as norbornene diamine and bis(aminomethyl) cyclohexane is more preferable. When the alicyclic amine compound (B4) is used, a mass ratio [(B1)/(B4)] of the N-(aminoalkyl) piperazine compound (B1) to the alicyclic amine compound (B4) is preferably 20/80 to 80/20.

In the curable composition of the present invention, a blending ratio between the epoxy compound (A) and the amine compound (B) is not particularly limited, and can be appropriately adjusted according to desired performance of a cured product or an application. As one example of blending, a method for blending in such a ratio that the total number of moles of active hydrogen in the amine compound (B) with respect to 1 mol of an epoxy group in the epoxy compound (A) is 0.5 to 1.05 mol is mentioned.

In addition, when tertiary amine, the imidazole compound, or the imidazoline compound is used as the amine compound (B), the compound is preferably blended in a ratio of 0.01% to 10% by mass with respect to a total mass of the curable composition.

In the present invention, another curing agent or curing accelerator (B') may be used together with the amine compound (B). As the other curing agent or curing accelerator (B'), any of various compounds generally used as a curing agent or a curing accelerator for an epoxy resin may be used. Specific examples thereof include an acid anhydride such as tetrahydrophthalic anhydride, methyltetrahydrophthalic anhydride, hexahydrophthalic anhydride, methylhexahydrophthalic anhydride, methylendoethylene tetrahydrophthalic anhydride, trialkyltetrahydrophthalic anhydride, methylnadic anhydride, phthalic anhydride, trimellitic anhydride, pyromellitic anhydride, and maleic anhydride;
amide compounds obtained by reacting dicyandiamide or a carboxylic acid compound such as aliphatic dicarboxylic acid, for example, succinic acid, glutaric acid, adipic acid, pimelic acid, suberic acid, and azelaic acid, fatty acid, or dimer acid with the amine compound (B);
an aliphatic hydrocarbon group such as a methyl group, an ethyl group, a vinyl group, a propyl group, a butyl group, a pentyl group, a hexyl group, a cyclohexyl group, a heptyl group, an octyl group, and a nonyl group, which are on aromatic nuclei, for example, phenol, dihydroxybenzene, trihydroxybenzene, naphthol, dihydroxynaphthalene, trihydroxynaphthalene, anthracenol, dihydroxyanthracene, trihydroxyanthracene, biphenol, and bisphenol; an alkoxy group such as a methoxy group, an ethoxy group, a propyloxy group, and a butoxy group; a halogen atom such as a fluorine atom, a chlorine atom, and a bromine atom; an aryl group such as a phenyl group, a naphthyl group, an anthryl group, and a group in which the aliphatic hydrocarbon group, the alkoxy group, or the halogen atom is substituted on these aromatic nuclei; phenolic hydroxyl group-containing compounds having one or more substituents such as a phenylmethyl group, a phenylethyl group, a naphthylmethyl group, a naphthylethyl group, and an aralkyl group in which the aliphatic hydrocarbon group, the alkoxy group, or the halogen atom is substituted on these aromatic nuclei;
a phenol resin such as novolak-type phenol resin, a triphenolmethane-type phenol resin, a tetraphenolethane-type phenol resin, a phenol or naphthol aralkyl-type phenol resin, a phenylene or naphthylene ether-type phenol resin resin, a dicyclopentadiene-phenol addition reaction product-type phenol resin, and a phenolic hydroxyl group-containing compound-alkoxy group-containing aromatic compound co-condensation-type phenol resin, which are formed of one or more kinds of the phenolic hydroxyl group-containing compounds;
a urea compound such as p-chlorophenyl-N,N-dimethylurea, 3-phenyl-1,1-dimethylurea, 3-(3,4-dichlorophenyl)-N,N-dimethylurea, and N-(3-chloro-4-methylphenyl)-N',N'-dimethylurea;
a phosphorus-based compound; an organic acid metal salt; Lewis acid; and amine complex salt.

A blending ratio of the other curing agent or curing accelerator (B') is appropriately adjusted according to desired performance of a cured product or an application, but is preferably 0.5% to 30% by mass in the curable composition. Among the other curing agents or curing accelerators (B'), since a curable composition which is excellent in rapid curability, or heat resistance or mechanical strength in terms of a cured product thereof is obtained, the phenolic hydroxyl group-containing compound or the phenol resin is preferable. The hydroxyl equivalent of the phenol resin is preferably 100 to 300 g/eq. A blending ratio of the phenolic hydroxyl group-containing compound or the phenol resin is appropriately adjusted according to desired performance of a cured product or an application, but is preferably 0.5% to 30% by mass and more preferably 0.5% to 10% by mass based on the curable composition.

A blending ratio among the epoxy compound (A), the amine compound (B), and the other curing agent or curing accelerator (B') is not particularly limited, and can be appropriately adjusted according to desired performance of a cured product or an application. As one example, a method for blending in such a ratio that the total number of moles of curable functional groups in the amine compound (B) and the other curing agent or curing accelerator (B') with respect to 1 mol of the epoxy group in the epoxy compound (A) is 0.5 to 1.05 mol is mentioned.

The acrylic resin (C) is a component which is added for the purpose of improving mechanical strength, particularly fracture toughness, of a cured product. In the present invention, by using the N- (aminoalkyl) piperazine compound (B) as the amine compound (B), an effect of improving the mechanical strength due to the addition of the acrylic resin (C) becomes more remarkable as compared with the case where another amine compound is used.

Regarding the acrylic resin (C), a constituent monomer, a polymerization method, or the like of the acrylic resin is appropriately selected depending on desired performance. Some specific examples of the constituent monomer include (meth) acrylic acid alkyl ester such as methyl (meth) acrylate, ethyl (meth)acrylate, butyl (meth)acrylate, and 2-ethylhexyl (meth)acrylate; (meth)acrylic acid ester having an alicyclic structure, such as cyclohexyl (meth)acrylate and cyclohexyl methacrylate; (meth) acrylic acid ester having an aromatic ring, such as benzyl (meth)acrylate; (meth)acrylic acid (fluoro) alkyl ester such as 2-trifluoroethyl (meth)acrylate; an acid group-containing monomer such as (meth)acrylic acid, (anhydrous) maleic acid, and maleic anhydride; a hydroxyl group-containing monomer such as hydroxyethyl (meth) acrylate, hydroxypropyl (meth)acrylate, and hydroxybutyl (meth)acrylate; an epoxy group-containing monomer such as glycidyl (meth)acrylate and 3,4-epoxycyclohexylmethyl methacrylate; an aromatic vinyl compound such as styrene; and a diene compound such as butadiene and isoprene. Among them, since a curable composition having superior mechanical strength in terms of a cured product thereof is obtained, an acrylic resin containing (meth) acrylic acid alkyl ester as a main component is preferable.

The acrylic resin is a diblock block copolymer obtained by copolymerizing a plurality of block polymers having different monomer constitutions, as a diblock type such as an A-B type. Among them, since a curable composition having superior mechanical strength in terms of a cured product thereof is obtained, it is preferable that both a block containing methyl (meth)acrylate as a main component and a block containing butyl (meth) acrylate as a main component are included. More specifically, a diblock-type acrylic resin formed of a polymethyl methacrylate block and a polybutyl acrylate block is preferable. The weight average molecular weight (Mw) of the acrylic resin is preferably 1,000 to 500, 000.

The content of the acrylic resin (C) in the curable composition is not particularly limited, and is appropriately adjusted according to desired performance of a cured product and the like. Among them, since a curable composition having superior mechanical strength in terms of a cured product thereof is obtained, the content of the acrylic resin with respect to a total mass of resin components in the curable composition is preferably 0.1% to 20% by mass and more preferably 0.5 to 10 parts by mass.

The curable composition of the present invention may contain other components (D) in addition to the epoxy compound (A), the amine compound (B), the other curing agent or curing accelerator (B'), and the acrylic resin (C) . Examples of the other components (D) include acid-modified polybutadiene, a polyether sulfone resin, a polycarbonate resin, and a polyphenylene ether resin.

The acid-modified polybutadiene is a component having reactivity with the epoxy compound (A), and by using the acid-modified polybutadiene in combination therewith, the obtained cured product can exhibit excellent mechanical strength, heat resistance, and moist-heat resistance.

Examples of the acid-modified polybutadiene include a component having a skeleton derived from 1,3-butadiene or 2-methyl-1,3-butadiene in a butadiene skeleton. Examples of the skeleton derived from 1,3-butadiene include a skeleton having any structure of a 1,2-vinyl type, a 1,4-trans type, and a 1,4-cis type, and a skeleton having two or more kinds of these structures. Examples of the skeleton derived from 2-methyl-1,3-butadiene include a skeleton having any structure of a 1,2-vinyl type, a 3,4-vinyl type, a 1,4-cis type, and a 1,4-trans type, and a skeleton having two or more kinds of these structures.

An acid-modified component of the acid-modified polybutadiene is not particularly limited, but unsaturated carboxylic acid can be mentioned. As the unsaturated carboxylic acid, acrylic acid, methacrylic acid, maleic acid, maleic anhydride, itaconic acid, and itaconic anhydride are preferable, and from the viewpoint of reactivity, itaconic anhydride and maleic anhydride are preferable and maleic anhydride is more preferable.

From the viewpoint of reactivity with the epoxy resin component (A), when the acid-modified polybutadiene is formed of a skeleton derived from 1,3-butadiene, in the content of the unsaturated carboxylic acid in the acid-modified polybutadiene, an acid value is preferably 5 mgKOH/g to 400 mgKOH/g, more preferably 20 mgKOH/g to 300 mgKOH/g, and still more preferably 50 mgKOH/g to 200 mgKOH/g. Moreover, the unsaturated carboxylic acid component may be copolymerized in the acid-modified polybutadiene, and the form is not limited. Examples thereof include random copolymerization, block copolymerization, and graft copolymerization (graft modification). The weight average molecular weight (Mw) of the acid-modified polybutadiene is preferably 1,000 to 100,000.

The acid-modified polybutadiene is obtained by modifying polybutadiene with unsaturated carboxylic acid, but a commercially available product may be used as it is. As the commercially available product, for example, maleic anhydride-modified liquid polybutadiene (polyvest MA 75, Polyvest EP MA 120, and the like) manufactured by Evonik Degussa GmbH, and maleic anhydride-modified polyisoprene (LIR-403 and LIR-410) manufactured by KURARAY CO., LTD. can be used.

From the viewpoint that elongation, heat resistance, and moist-heat resistance of the obtained cured product become favorable, the acid-modified polybutadiene in the curable composition is preferably contained in a ratio of 1 part by mass to 40 parts by mass and more preferably contained in a ratio of 3 parts by mass to 30 parts by mass with respect to 100 parts by mass of the total mass of the resin components in the curable composition.

The polyether sulfone resin is a thermoplastic resin, is not included in a crosslinked network in a curing reaction of the curable composition, but can exhibit superior mechanical strength and heat resistance in terms of the obtained cured product due to an excellent modifier effect with high Tg.

From the viewpoint that mechanical strength and heat resistance of the obtained cured product become favorable, the polyether sulfone resin in the curable composition is preferably contained in a ratio of 1 part by mass to 30 parts by mass and more preferably contained in a ratio of 3 parts by mass to 20 parts by mass with respect to 100 parts by mass of the total mass of the resin components in the curable composition.

Examples of the polycarbonate resin include a polycondensate of dihydric or bifunctional phenol and carbonyl halide, and a resin obtained by polymerizing dihydric or bifunctional phenol and carbonic acid diester by a transesterification method.

Examples of the dihydric or bifunctional phenol include 4,4'-dihydroxybiphenyl, bis(4-hydroxyphenyl) methane, 1,1-bis(4-hydroxyphenyl) ethane, 2,2-bis(4-hydroxyphenyl) propane, 2,2-bis(3-methyl-4-hydroxyphenyl) propane, 2,2-bis(3,5-dimethyl-4-hydroxyphenyl) propane, 1,1-bis(4-hydroxyphenyl) cyclohexane, bis(4-hydroxyphenyl) ether, bis(4-hydroxyphenyl) sulfide, bis(4-hydroxyphenyl) sulfone, bis(4-hydroxyphenyl) sulfoxide, bis(4-hydroxyphenyl) ketone, hydroquinone, resorcin, and catechol. Among the dihydric phenol, bis(hydroxyphenyl) alkanes are preferable, and phenol using 2,2-bis(4-hydroxyphenyl) propane as a main raw material is particularly preferable.

On the other hand, examples of the carbonyl halide or the carbonic acid diester reacted with the dihydric or bifunctional phenol include phosgene; diaryl carbonate such as dihaloformate of dihydric phenol, diphenyl carbonate, ditolyl carbonate, bis(chlorophenyl) carbonate, and m-cresyl carbonate; and an aliphatic carbonate compound such as dimethyl carbonate, diethyl carbonate, diisopropyl carbonate, dibutyl carbonate, diamyl carbonate, and dioctyl carbonate.

In addition, in the polycarbonate resin, a molecular structure of a polymer chain may be a branched structure in addition to a linear structure. Such a branched structure can be introduced by using 1,1,1-tris(4-hydroxyphenyl) ethane, α,α',α"-tris(4-hydroxyphenyl)-1,3,5-triisopropylbenzene, phloroglucin, trimellitic acid, or isatin bis(o-cresol) as a raw material component.

Examples of the polyphenylene ether resin include poly(2,6-dimethyl-1,4-phenylene) ether, poly(2-methyl-6-ethyl-14-phenylene) ether, poly(2,6-diethyl-1,4-phenylene) ether, poly(2-ethyl-6-n-propyl-1,4-phenylene) ether, poly(2,6-di-n-propyl-1,4-phenylene) ether, poly(2-methyl-6-n-butyl-1,4-phenylene) ether, poly(2-ethyl-6-isopropyl-1,4-phenylene) ether, and poly(2-methyl-6-hydroxyethyl-1,4-phenylene) ether.

Among them, poly(2,6-dimethyl-1,4-phenylene) ether is preferable, and polyphenylene ether containing a 2-(dialkylaminomethyl)-6-methylphenylene ether unit or a 2-(N-alkyl-N-phenylaminomethyl)-6-methylphenylene ether unit as a partial structure may be used.

As the polyphenylene ether resin, a modified polyphenylene ether resin in which a reactive functional group such as a carboxyl group, an epoxy group, an amino group, a mercapto group, a silyl group, a hydroxyl group, and an anhydrous dicarboxyl group is introduced into the resin structure by any method such as a graft reaction or copolymerization can also be used as long as the object of the present invention is not impaired.

When the curable composition of the present invention contains the polycarbonate resin or the polyphenylene ether resin, the obtained cured product can exhibit superior mechanical strength.

The curable composition of the present invention can contain a flame retardant/a flame retardant auxiliary, a filler, an additive, an organic solvent, and the like as long as the effects of the present invention are not impaired. A blending order when the curable composition is produced is not particularly limited as long as the method can achieve the effects of the present invention. That is, all the components may be mixed at a time and then used, or each of the components may be mixed in a suitable order and then used. With respect to a blending method, for example, kneading with a kneading machine such as an extruder, a heating roll, a kneader, a roller mixer, and a Banbury mixer may be performed for the production. Hereinafter, various members which can be contained in the curable composition of the present invention will be described.

### · Flame retardant/Flame retardant auxiliary

The curable composition of the present invention may contain a non-halogen-based flame retardant, which does not substantially contain a halogen atom, in order to exhibit flame retardancy.

Examples of the non-halogen-based flame retardant include a phosphorus-based flame retardant, a nitrogen-based flame retardant, a silicone-based flame retardant, an inorganic flame retardant, and an organic metal salt-based flame retardant, the use of the flame retardants is not particularly limited, and the flame retardant may be used alone, a plurality of flame retardants of the same system may be used, or a combination of flame retardants of different systems can be used.

As the phosphorus-based flame retardant, both an inorganic flame retardant and an organic flame retardant can be used. Examples of the inorganic compound include red phosphorus, ammonium phosphates such as monoammonium phosphate, diammonium phosphate, triammonium phosphate, and ammonium polyphosphate, and an inorganic nitrogen-containing phosphorus compound such as phosphoric acid amide.

In addition, the red phosphorus is preferably subjected to a surface treatment for the purpose of preventing hydrolysis and the like, and examples of the surface treatment method include a method (i) of performing a coating treatment with an inorganic compound such as magnesium hydroxide, aluminum hydroxide, zinc hydroxide, titanium hydroxide, bismuth oxide, bismuth hydroxide, bismuth nitrate, or a mixture thereof; a method (ii) of performing a coating treatment with a mixture of an inorganic compound such as magnesium hydroxide, aluminum hydroxide, zinc hydroxide, and titanium hydroxide and a thermosetting resin such as a phenol resin; and a method (iii) of performing doubly a coating treatment with a thermosetting resin such as a phenol resin on a coating film formed of an inorganic compound such as magnesium hydroxide, aluminum hydroxide, zinc hydroxide, and titanium hydroxide.

Examples of the organic phosphorus-based compound include cyclic organic phosphorus compounds such as 9,10-dihydro-9-oxa-10-phosphaphenanthrene=10-oxide, 10-(2,5-dihydroxyphenyl)-10H-9-oxa-10-phosphaphenanthrene= 10-oxide, and 10-(2,7-dihydroxynaphthyl)-10H-9-oxa-10-phosphaphenanthren e=10-oxide, in addition to general-purpose organic phosphorus-based compounds such as a phosphoric acid ester compound, a phosphonic acid compound, a phosphinic acid compound, a phosphine oxide compound, a phosphorane compound, and an organic nitrogen-containing phosphorus compound.

In addition, when the phosphorus-based flame retardant is used, hydrotalcite, magnesium hydroxide, a boron compound, zirconium oxide, a black dye, calcium carbonate, zeolite, zinc molybdate, activated carbon, or the like may be used in combination with the phosphorus-based flame retardant.

Examples of the nitrogen-based flame retardant include a triazine compound, a cyanuric acid compound, an isocyanuric acid compound, and a phenothiazine, and a triazine compound, a cyanuric acid compound, and an isocyanuric acid compound are preferable.

Examples of the triazine compound include an aminotriazine sulfate compound such as guanylmelamine sulfate, melem sulfate, and melam sulfate, a phenol resin obtained by modifying the aminotriazine, and a compound obtained by further modifying the aminotriazine-modified phenol resin with tung oil, isomerized linseed oil, or the like, in addition to melamine, acetoguanamine, benzoguanamine, melon, melam, succinoguanamine, ethylenedimelamine, melamine polyphosphate, and triguanamine.

Specific examples of the cyanuric acid compound include cyanuric acid and melamine cyanurate.

The blending amount of the nitrogen-based flame retardant is appropriately selected depending on a type of the nitrogen-based flame retardant, other components of the curable composition, and a desired degree of flame retardancy, but for example, the nitrogen-based flame retardant is preferably blended in an amount of 0.05 parts by mass to 10 parts by mass and particularly preferably blended in an amount of 0.1 parts by mass to 5 parts by mass with respect to 100 parts by mass of the total of the resin components in the curable composition.

Furthermore, when the nitrogen-based flame retardant is used, a metal hydroxide, a molybdenum compound, or the like may be used in combination therewith.

The silicone-based flame retardant can be used without any particular limitation as long as the flame retardant is an organic compound containing a silicon atom, and examples thereof include silicone oil, silicone rubber, and a silicone resin.

The blending amount of the silicone-based flame retardant is appropriately selected depending on a type of the silicone-based flame retardant, other components of the curable composition, and a desired degree of flame retardancy, but for example, the silicone-based flame retardant is preferably blended in an amount of 0.05 parts by mass to 20 parts by mass with respect to 100 parts by mass of the total of the resin components in the curable composition. Furthermore, when the silicone-based flame retardant is used, a molybdenum compound, alumina, or the like may be used in combination therewith.

Examples of the inorganic flame retardant include a metal hydroxide, a metal oxide, a metal carbonate compound, metal powder, a boron compound, and low-melting point glass.

Specific examples of the metal hydroxide include aluminum hydroxide, magnesium hydroxide, dolomite, hydrotalcite, calcium hydroxide, barium hydroxide, and zirconium hydroxide.

Specific examples of the metal oxide include zinc molybdate, molybdenum trioxide, zinc stannate, tin oxide, aluminum oxide, iron oxide, titanium oxide, manganese oxide, zirconium oxide, zinc oxide, molybdenum oxide, cobalt oxide, bismuth oxide, chromium oxide, nickel oxide, copper oxide, and tungsten oxide.

Specific examples of the metal carbonate compound include zinc carbonate, magnesium carbonate, calcium carbonate, barium carbonate, basic magnesium carbonate, aluminum carbonate, iron carbonate, cobalt carbonate, and titanium carbonate.

Specific examples of the metal powder include aluminum, iron, titanium, manganese, zinc, molybdenum, cobalt, bismuth, chromium, nickel, copper, tungsten, and tin.

Specific examples of the boron compound include zinc borate, zinc metaborate, barium metaborate, boric acid, and borax.

Specific examples of the low-melting point glass include CEEPREE (Bokusui Brown Co., Ltd.), hydrated glass SiO₂-MgO-H₂O, and PbO-B₂O₃-based, ZnO-P₂O₅-MgO-based, P₂O₅-B₂O₃-PbO-MgO-based, P-Sn-O-F-based, PbO-V₂O₅-TeO₂-based, Al₂O₃-H₂O-based, or lead borosilicate-based glassy compounds.

The blending amount of the inorganic flame retardant is appropriately selected depending on a type of the inorganic flame retardant, other components of the curable composition, and a desired degree of flame retardancy, but for example, the inorganic flame retardant is preferably blended in an amount of 0.05 parts by mass to 20 parts by mass and particularly preferably blended in an amount of 0.5 parts by mass to 15 parts by mass with respect to 100 parts by mass of the total of the resin components in the curable composition.

Examples of the organic metal salt-based flame retardant include ferrocene, an acetylacetonate metal complex, an organometallic carbonyl compound, an organic cobalt salt compound, an organic sulfonic acid metal salt, and a compound in which a metal atom is ionically or coordinately bonded to an aromatic compound or a heterocyclic compound.

The blending amount of the organic metal salt-based flame retardant is appropriately selected depending on a type of the organic metal salt-based flame retardant, other components of the curable composition, and a desired degree of flame retardancy, but for example, the organic metal salt-based flame retardant is preferably blended in an amount of 0.005 parts by mass to 10 parts by mass with respect to 100 parts by mass of the total of the resin components in the curable composition.

### · Filler

The curable composition of the present invention may contain a filler. When the curable composition of the present invention contains the filler, the obtained cured product can exhibit excellent mechanical characteristics.

Examples of the filler include titanium oxide, a glass bead, a glass flake, a glass fiber, calcium carbonate, barium carbonate, calcium sulfate, barium sulfate, potassium titanate, aluminum borate, magnesium borate, fused silica, crystalline silica, alumina, silicon nitride, aluminum hydroxide, a fibrous reinforcing agent such as a kenaf fiber, a carbon fiber, an alumina fiber, and a quartz fiber, and a non-fibrous reinforcing agent. One kind of the filler may be used alone, or two or more kinds thereof may be used in combination. Moreover, these fillers may be coated with an organic substance, an inorganic substance, or the like.

In addition, when a glass fiber is used as the filler, the glass fiber can be selected from long fiber-type roving, a short fiber-type chopped strand, and a milled fiber and used. As the glass fiber, a glass fiber subjected to a surface treatment for the resin to be used is preferably used. By blending the filler, strength of a non-combustible layer (or carbonized layer) formed during combustion can be further improved. The non-combustible layer (or carbonized layer) once formed during combustion is less likely to be damaged, and can exhibit a stable heat insulation ability, and thus a greater flame-retardant effect can be obtained. Furthermore, high rigidity can be imparted to the material.

### · Additive

The curable composition of the present invention may contain an additive. When the curable composition of the present invention contains the additive, other characteristics such as rigidity and dimensional stability of the obtained cured product are improved. As the additive, for example, a plasticizer, an antioxidant, an ultraviolet absorber, a stabilizer such as a photostabilizer, an antistatic agent, a conductivity-imparting agent, a stress relaxing agent, a release agent, a crystallization accelerator, a hydrolysis inhibitor, a lubricant, an impact imparting agent, a slidability improver, a compatibilizer, a nucleating agent, an enhancer, a reinforcing agent, a flow regulator, a dye, a sensitizer, a coloring pigment, a rubbery polymer, a thickener, an antisettling agent, an anti-sagging agent, an antifoaming agent, a coupling agent, a rust inhibitor, an antibacterial/antifungal agent, an antifouling agent, a conductive polymer, or the like can be added.

### · Organic solvent

The curable composition of the present invention may contain an organic solvent when a fiber-reinforced resin molded article is produced by a filament winding method. Examples of the organic solvent that can be used here include methyl ethyl ketone acetone, dimethylformamide, methyl isobutyl ketone, methoxypropanol, cyclohexanone, methyl cellosolve, ethyl diglycol acetate, and propylene glycol monomethyl ether acetate, and selection and a proper used amount thereof can be appropriately selected depending on an application.

The curable composition of the present invention can be used in various applications such as a paint, an electric and electronic material, an adhesive, and a molded article by taking advantage of features that a curing speed is very high and a cured product has excellent heat resistance or mechanical strength. The curable composition of the present invention can be suitably used for a fiber-reinforced composite material, a fiber-reinforced resin molded article, or the like, in addition to an application in which the curable composition itself is cured and then used. These cases will be described below.

### · Cured product of curable composition

The method for obtaining a cured product from the curable composition of the present invention may be in accordance with a general method for curing an epoxy resin composition, and for example, a heating temperature condition may be appropriately selected depending on a type and an application of the curing agent to be combined. For example, a method in which the curable composition is heated in a temperature range of room temperature to about 250°C is mentioned. A general method for the curable composition can be used also for the molding method and the like, and in particular, conditions specific to the curable composition of the present invention are not required.

### · Fiber-reinforced composite material

The fiber-reinforced composite material of the present invention is a material in a state in which a curable composition is impregnated in a reinforced fiber but is not yet cured. Here, the reinforced fiber may be any of a twisted yarn, an untwisted yarn, and a non-twisted yarn, but an untwisted yarn or a non-twisted yarn is preferable since the fiber-reinforced composite material exhibits excellent moldability. Moreover, as a form of the reinforced fiber, a fiber in which fiber directions are aligned in one direction or a woven fabric can be used. The woven fabric can be freely selected from plain weave, satin weave, and the like according to a site to be used and an application. Specifically, since mechanical strength or durability is excellent, a carbon fiber, a glass fiber, an aramid fiber, a boron fiber, an alumina fiber, and a silicon carbide fiber are mentioned, two or more kinds thereof can be used in combination. Among them, particularly from the viewpoint that strength of a molded article becomes favorable, a carbon fiber is preferable, and as such a carbon fiber, various carbon fibers such as a polyacrylonitrile system, a pitch system, and a rayon system can be used.

The method for obtaining the fiber-reinforced composite material from the curable composition of the present invention is not particularly limited, and examples thereof include a method (state before curing by a pultrusion method or a filament winding method) of uniformly mixing respective components constituting a curable composition to produce a varnish, and then immersing a unidirectionally reinforced fiber in which reinforced fibers are aligned in one direction in the varnish obtained above; and a method (state before curing by an RTM method) of staking woven fabrics of reinforced fibers, setting the resultant in a concave mold, then performing sealing with a convex mold, and injecting a resin to perform pressure impregnation.

In the fiber-reinforced composite material of the present invention, the curable composition is not necessary to be impregnated up to an inside of a fiber bundle, and an aspect in which the curable composition is localized near a surface of the fiber may be adopted.

In addition, in the fiber-reinforced composite material of the present invention, the volume content of the reinforced fiber with respect to the total volume of the fiber-reinforced composite material is preferably 40% to 85%, and from the viewpoint of strength, is more preferably 50% to 70%. When the volume content is less than 40%, the content of the curable composition is too large, and thus the obtained cured product may have insufficient flame retardancy or various characteristics required for a fiber-reinforced composite material having excellent specific elastic modulus and specific strength may not be satisfied. Moreover, the volume content exceeds 85%, adhesiveness between the reinforced fiber and the resin composition may be reduced.

### · Fiber-reinforced resin molded article

The fiber-reinforced resin molded article of the present invention is a molded article having a reinforced fiber and a cured product of a curable composition, and is obtained by thermosetting a fiber-reinforced composite material. Regarding the fiber-reinforced resin molded article of the present invention, specifically, the volume content of the reinforced fiber in the fiber-reinforced molded article is preferably 40% to 85%, and from the viewpoint of strength, is particularly preferably 50% to 70%. Examples of such a fiber-reinforced resin molded article include an automobile component such as a front subframe, a rear subframe, a front pillar, a center pillar, a side member, a cross member, a side sill, a roof rail, and a propeller shaft, a core member of an electric wire cable, a pipe material for an offshore oil field, a roll and pipe material for a printing machine, a robot fork material, and a primary structural material and a secondary structural material for an aircraft.

The method for obtaining a fiber-reinforced molded article from the curable composition of the present invention is not particularly limited, but a drawing molding method (pultrusion method), a filament winding method, or an RTM method is preferably used. The drawing molding method (pultrusion method) is a method in which a fiber-reinforced composite material is introduced into a mold, heated and cured, and then drawn out by a drawing device to mold a fiber-reinforced resin molded article, the filament winding method is a method in which a fiber-reinforced composite material (including a unidirectional fiber) is wound around an aluminum liner or a plastic liner while rotating, and then heated and cured to mold a fiber-reinforced resin molded article, and the RTM method is a method in which two types of molds, that is, a concave mold and a convex mold are used and a fiber-reinforced composite material is heated and cured in the molds to mold a fiber-reinforced resin molded article. Furthermore, when a large product or a fiber-reinforced resin molded article having a complicated shape is molded, the RTM method is preferably used.

Regarding a molding condition for the fiber-reinforced resin molded article, the fiber-reinforced composite material is preferably thermoset in a temperature range of 50°C to 250°C to perform molding, and is more preferably molded in a temperature range of 70°C to 220°C. This is because when such a molding temperature is too low, sufficient rapid curability may not be obtained, whereas when the molding temperature is too high, warpage due to a thermal strain may be likely to occur. As other molding conditions, a method for curing in two stages, such as a method in which a fiber-reinforced composite material is pre-cured at 50°C to 100°C to form a tack-free cured product, and then the tack-free cured product is further treated under a temperature condition of 120°C to 200°C, can be mentioned.

Examples of another method for obtaining a fiber-reinforced molded article from the curable composition of the present invention include a hand lay-up method or a spray-up method in which a fiber aggregate is laid in a mold and the varnish or the fiber aggregate is multiply laminated; a vacuum bag method in which either a male mold or a female mold is used, staking and molding are performed in a state where a substrate formed of a reinforced fiber is impregnated with a varnish, and the resultant is covered with a flexible mold which can apply pressure to a molded article, airtightly sealed, and then molded under vacuum (reduced pressure); and an SMC press method in which a varnish containing a reinforced fiber, which is formed in a sheet shape in advance, is compression-molded with a mold.

### Examples

Next, the present invention will be specifically described with reference to Examples and Comparative Examples, and in the following description, "parts" and "%" are based on a mass unless otherwise specified.

### Examples 1 to 10 and Comparative Example 1

Respective components were blended according to blending shown in Tables 2 to 4 below, and uniformly stirred and mixed to obtain a curable composition. Various evaluation tests were performed on the curable composition in the following manner. The results are shown in Tables 2 to 4.

**[Table 1]**

| Details of respective components used in Examples | | |
|---|---|---|
| Epoxy compound | A-1 | "EPICLON 840S" manufactured by DIC CORPORATION Bisphenol A-type epoxy resin, epoxy group equivalent of 184 g/eq |
| | A-2 | "EPICLON 830S" manufactured by DIC CORPORATION Bisphenol F-type epoxy resin, epoxy group equivalent of 168 g/eq |
| | A-3 | "DENACOL EX212L" manufactured by Nagase ChemteX Corporation 1,6-Hexanediol-type epoxy resin, epoxy group equivalent of 135 g/eq |
| | A-4 | "XY-622" manufactured by Anhui XinYuan Chemical Co., Ltd. 1,4-Butanediol-type epoxy resin, epoxy group equivalent of 131 g/eq |
| | A-5 | "EPICLON EXA-7250" manufactured by DIC CORPORATION Triphenolmethane-type epoxy resin, epoxy group equivalent of 164 g/eq |
| | A-6 | "EPICLON HP-4710" manufactured by DIC CORPORATION Bis(hydroxynaphthalene)-type epoxy compound, epoxy group equivalent of 173 g/eq |
| | A-7 | "S-720" manufactured by Synasya Inc. 4,4'-Methylene bis[N,N-diglycidylaniline], epoxy group equivalent of 118 g/eq |
| Amine compound | B1-1 | N-Aminoethyl piperazine |
| | B2-1 | Triethylenetetramine |
| | B4-1 | 1,3-Bis(aminomethyl) cyclohexane |
| | B4-2 | Norbornenediamine |
| | B4-3 | Isophoronediamine |
| | B4-4 | Bis(4-aminocyclohexyl) methane |
| | B6-1 | Diaminodiphenylmethane or methylene bis N-methylaniline |
| Others | B'-1 | Bisphenol A |
| Acrylic resin | C-1 | "NANOSTRENGTH D51N" manufactured by Arkema S.A. Diblock-type acrylic resin formed of polymethyl methacrylate block and polybutyl acrylate block |
| | C-2 | "NANOSTRENGTH M51" manufactured by Arkema S.A. Triblock-type acrylic resin formed of polymethyl methacrylate block, polybutyl acrylate block, and polymethyl methacrylate block |

### Measurement of gel time

Immediately after the respective components were blended in the ratios shown in Table 2, 0.15 g of the curable composition was placed on a hot plate heated to 100°C, and a time (seconds) until the curable composition became a gel while being stirred with a spatula was measured. The same operation was repeated three times, and an average value thereof was evaluated.
A: 360 seconds or shorter
B: 361 seconds to 720 seconds
C: 721 seconds or longer

### Measurement of glass transition temperature

The curable composition obtained above was poured into a molding flask having a thickness of 2 mm and heated at 120°C for 2 minutes. The obtained cured product was cut with a diamond cutter so as to have a width of 5 mm and a length of 50 mm, and the resultant was used as a test piece. Next, the dynamic viscoelasticity of the test piece due to double-sided bending was measured using a viscoelasticity measurement device ("DMS6100" manufactured by SII NanoTechnology Inc.), and a temperature at which tan δ became the maximum was evaluated as a glass transition temperature (Tg).

Furthermore, measurement conditions for the dynamic viscoelasticity measurement were as follows: a temperature condition was room temperature to 260°C, a temperature rising rate was 3°C/min, a frequency was 1 Hz, and a strain amplitude was 10 um.

### Measurement of fracture toughness

A value of K_{IC} was measured in accordance with ASTM D5045-99.

**[Table 2]**

| | | Example 1 | Example 2 | Example 3 | Example 4* | Example 5 | Example 6 |
|---|---|---|---|---|---|---|---|
| Epoxy compound | A-1 [parts by mass] | 76.0 | 76.0 | 76.0 | 76.0 | 76.0 | |
| | A-2 [parts by mass] | | | | | | 75.0 |
| | A-3 [parts by mass] | 4.0 | 4.0 | 4.0 | 4.0 | 4.0 | |
| Amine compound | B1-1 [parts by mass] | 6.4 | 6.4 | 10.6 | 6.4 | 6.4 | 6.4 |
| | B2-1 [parts by mass] | | | | | 7.2 | |
| | B4-1 [parts by mass] | 10.6 | 10.6 | 6.4 | 10.6 | | 10.6 |
| Others | B'-1 [parts by mass] | 3.0 | | | | | |
| Acrylic resin | C-1 [parts by mass] | 3.0 | 3.0 | 5.0 | | 3.0 | 3.0 |
| | C-2 [parts by mass] | | | | 3.0 | | |
| Gel time | | A | A | A | A | A | A |
| DMA Tg [°C] | | 127 | 132 | 122 | 122 | 117 | 125 |
| Fracture toughness (KIC) [MPa·m^0.5] | | 1.6 | 1.6 | 1.7 | 1.4 | 1.6 | 1.5 |

| | | | | | | | |
|---|---|---|---|---|---|---|---|
| * Reference | | | | | | | |

**[Table 3]**

| | | Example 7 | Example 8 | Example 9 | Example 10 |
|---|---|---|---|---|---|
| Epoxy compound | A-1 [parts by mass] | | 35.0 | 70.0 | 76.0 |
| | A-2 [parts by mass] | 60.0 | | | |
| | A-4 [parts by mass] | 4.0 | 4.0 | 4.0 | 4.0 |
| | A-5 [parts by mass] | 15.0 | | | |
| | A-6 [parts by mass] | | | 5.0 | |
| | A-7 [parts by mass] | | 30.0 | | |
| Amine compound | B1-1 [parts by mass] | 10.3 | 10.2 | 9.5 | 6.4 |
| | B4-1 [parts by mass] | | | | 10.6 |
| | B4-2 [parts by mass] | 9.2 | | | |
| | B4-3 [parts by mass] | | 10.1 | | |
| | B4-4 [parts by mass] | | | 11.5 | |
| Acrylic resin | C-1 [parts by mass] | 3. 0 | 3.0 | 3.0 | 3.0 |
| Gel time | | A | B | B | A |
| DMA Tg [°C] | | 126 | 123 | 125 | 128 |
| Fracture toughness (KIC) [MPa·m^0.5] | | 1.2 | 1.5 | 1.4 | 1.7 |

**[Table 4]**

| | | Comparative Example 1 | Comparative Example 2 |
|---|---|---|---|
| Epoxy compound | A-1 [parts by mass] | 76.2 | 72.4 |
| | A-4 [parts by mass] | 4.0 | 3.8 |
| Amine compound | B4-1 [parts by mass] | 19.8 | |
| | B6-1 [parts by mass] | | 20.8 |
| Acrylic resin | C-2 [parts by mass] | | 3.0 |
| Gel time | | B | Curing was not performed |
| DMA Tg [°C] | | 120 | |
| Fracture toughness (KIC) [MPa·m^0.5] | | 0.6 | |

## Claims

1. A curable composition comprising:
an epoxy compound (A);
an amine compound (B); and
an acrylic resin (C), wherein the acrylic resin (C) is a diblock-type acrylic resin;
wherein the amine compound (B) contains an N-(aminoalkyl) piperazine compound (B1) as an essential component.

2. The curable composition according to claim 1, wherein the epoxy compound (A) contains a bisphenol-type epoxy resin (A1) as an essential component.

3. The curable composition according to claim 1, wherein a proportion of the N-(aminoalkyl) piperazine compound (B1) with respect to a total mass of the amine compound (B) is 20% to 80% by mass.

4. A cured product of the curable composition according to any one of claims 1 to 3.

5. A fiber-reinforced composite material comprising, as essential components:
the curable composition according to any one of Claims 1 to 3; and
a reinforced fiber.

6. A fiber-reinforced resin molded article comprising, as essential components:
the cured product according to claim 4; and
a reinforced fiber.

7. A method for producing a fiber-reinforced resin molded article, comprising:
thermosetting the fiber-reinforced composite material according to claim 5.

## Patentansprüche

1. Härtbare Zusammensetzung, umfassend:
eine Epoxidverbindung (A);
eine Aminverbindung (B); und
ein Acrylharz (C), wobei das Acrylharz (C) ein Acrylharz vom Diblock-Typ ist;
wobei die Aminverbindung (B) eine N-(Aminoalkyl)piperazinverbindung (B1) als wesentlichen Bestandteil enthält.

2. Härtbare Zusammensetzung nach Anspruch 1, wobei die Epoxidverbindung (A) ein Epoxidharz vom Bisphenol-Typ (A1) als wesentlichen Bestandteil enthält.

3. Härtbare Zusammensetzung nach Anspruch 1, wobei der Anteil der N-(Aminoalkyl)-piperazinverbindung (B1), bezogen auf die Gesamtmasse der Aminverbindung (B), 20 bis 80 Massenprozent beträgt.

4. Gehärtetes Produkt aus der härtbaren Zusammensetzung nach einem der Ansprüche 1 bis 3.

5. Faserverstärkter Verbundwerkstoff, der als wesentliche Bestandteile umfasst:
die härtbare Zusammensetzung nach einem der Ansprüche 1 bis 3; und
eine verstärkte Faser.

6. Faserverstärkter Harzformkörper, der als wesentliche Bestandteile umfasst:
das gehärtete Produkt nach Anspruch 4; und
eine verstärkte Faser.

7. Verfahren zur Herstellung eines faserverstärkten Harzformkörpers, umfassend:
Thermohärtung des faserverstärkten Verbundwerkstoffs nach Anspruch 5.

## Revendications

1. Composition durcissable comprenant :
un composé époxy (A) ;
un composé aminé (B) ; et
une résine acrylique (C), dans laquelle la résine acrylique (C) est une résine acrylique de type dibloc ;
dans laquelle le composé aminé (B) contient un composé N-(aminoalkyl) pipérazine (B1) comme composant essentiel.

2. Composition durcissable selon la revendication 1, dans laquelle le composé époxy (A) contient une résine époxy de type bisphénol (A1) comme composant essentiel.

3. Composition durcissable selon la revendication 1, dans laquelle la proportion du composé N-(aminoalkyl) pipérazine (B1) par rapport à la masse totale du composé amine (B) est de 20 % à 80 % en masse.

4. Produit durci de la composition durcissable selon l'une des revendications 1 à 3.

5. Matériau composite renforcé par des fibres comprenant, comme composants essentiels :
la composition durcissable selon l'une quelconque des revendications 1 à 3 ; et
une fibre renforcée.

6. Article moulé en résine renforcée de fibres comprenant, comme composants essentiels :
le produit durci selon la revendication 4 ; et
une fibre renforcée.

7. Méthode de production d'un article moulé en résine renforcée par des fibres, comprenant :
thermodurcissement du matériau composite renforcé de fibres selon la revendication 5.
